# EUROPEAN PATENT SPECIFICATION

(11) **EP 3 228 744 B1**
(45) Date of publication and mention of the grant of the patent: **02.06.2021**
(21) Application number: 16164082.6
(22) Date of filing: 06.04.2016
(51) Int. Cl.: D21H 11/18, B42D 15/00, D21H 19/10, D21H 19/52, D21H 21/18, D21H 21/40, D21H 23/22

(54) **USE OF NANO CELLULOSE ON A PAPER PRODUCT**
VERWENDUNG VON NANO-CELLULOSE AUF EINEM PAPIERPRODUKT
UTILISATION DE NANOCELLULOSE SUR UN PRODUIT EN PAPIER

(43) Date of publication of application: 11.10.2017
(73) Proprietor: European Central Bank, 60314 Frankfurt am Main (DE)
(72) Inventor: Bras, Julien, 38410 Saint Martin d'Uriage (FR); Dufresne, Alain, 38410 Saint Martin d'Uriage (FR); Desmaisons, Johanna, 38400 Saint Martin d'Héres (FR); Roberty, Gilles, 61440 Oberursel (DE); Lutsche, Marion, 65812 Bad Soden (DE)
(74) Representative: Prinz & Partner mbB

(56) References cited:
- EP-A1- 1 800 891
- EP-B1- 1 468 142
- EP-B1- 1 506 095
- WO-A1-85/03316
- WO-A1-2011/056130
- WO-A1-2013/178986
- US-A- 5 767 176
- US-A1- 2014 302 336
- US-A1- 2015 017 432
- US-B2- 9 718 980

## Description

### FIELD OF THE INVENTION

The invention relates to a use of nanocrystalline cellulose as a coating for increasing dog ear resistance and/or dog ear recovery of a paper product selected from the group of a security document, a banknote, a certificate or a certified copy of a document as well as a valuable document selected from the group consisting of a security document, a banknote, a certificate or a certified copy of a document comprising the nanocrystalline coated semi-finished paper product and one or more security features and/or prints.

### BACKGROUND

It is well known in the field of paper products, that a paper product may be intentionally or unintentionally folded down during use to form flaps, so called "dog ears". Although dog ears may serve as bookmarks to mark important sections in books, dog ears may also cause problems as the flapped corner locally increases the thickness of the paper product and, thus, in particular automatic handling / transportation of a plurality of paper products, such as banknotes, becomes more complicated and may in particular cause paper jams. With respect to banknotes as an example for paper products the locally increased thickness of the banknote substrate in the area of the dog ear may also cause problems when storing the banknotes in a banknote machine, as the banknotes are stored in boxes with specific heights in order to store a specific number of banknotes. Such dog eared banknotes may additionally cause problems in case a further banknote is caught by the dog eared banknote and, thus, two banknotes are handled as one banknote in particular in automated proceedings. A further problem may arise, in case a dog ear covers a security feature, which in particular in automated proceedings then cannot be detected anymore. Finally, the dog eared corners of a paper product can be separate from the paper product. For a banknote this generally means that such a separated banknote is unfit for use and should be removed from circulation.

According to the prior art, some solutions have been disclosed to reduce the paper jam problematic when automated processing dog eared banknotes. According to one alternative the use of round corners of banknote substrates has been suggested in EP 1 506 095 B1 (Giesecke &Devrient, G&D) to reduce the paper jam problematic. The use of banknotes with round corners, however, requires issuance of complete novel banknotes and also adaptation in the (automated) handling of the round cornered banknotes.

According to a second alternative a local enforcement of the corner regions by watermarks has been disclosed in EP 1 468 142 B1 / EP 1 466 755 B1 (De La Rue) and EP 2 899 315 A1 (G&D). However, such a localized enforcement of the corner regions by forming watermarks requires a complex adaptation of the paper manufacturing process.

Accordingly, it is an aim of the present invention to provide a valuable document selected from a security document, a banknote, a certificate or a certified copy of a document paper product with an increased dog ear resistance and/or dog ear recovery when exposed to mechanical stress to reduce or prevent problems when handling, in particular automated handling of the paper products and/or prevent separation of the dog eared flapped corner of the paper product and, thus, increase the life time of the paper product.

### SUMMARY

One or more of the aforementioned problems are solved by the inventive aspects. Advantageous embodiments are disclosed in the dependent claims as well as in the following description.

According to a first aspect of the invention, a use of nanocrystalline cellulose having a length in the range of 100 to 500 nm and a width in the range of 5 to 10 nm for increasing dog ear resistance and/or dog ear recovery of a paper product selected from a group consisting of a security document, a banknote, a certificate or a certified copy of a document, wherein at least part, preferably the whole surface of the paper product is coated with the nanocrystalline cellulose.

A second aspect of the invention concerns a valuable document selected from a group consisting of a security document, a banknote, a certificate or a certified copy of a document comprising a semi-finished paper product, wherein at least part, preferably the whole surface of the semi-finished paper product is coated with nanocrystalline cellulose having a length in the range of 100 to 500 nm and a width in the range of 5 to 10 nm, characterized in that the valuable document comprises one or more security features and/or prints applied on top of the surface of the nanocrystalline cellulose coating, but does not comprise a security feature applied on the surface of the paper product and below the nanocrystalline cellulose coating.

### BRIEF DESCRIPTION OF DRAWINGS

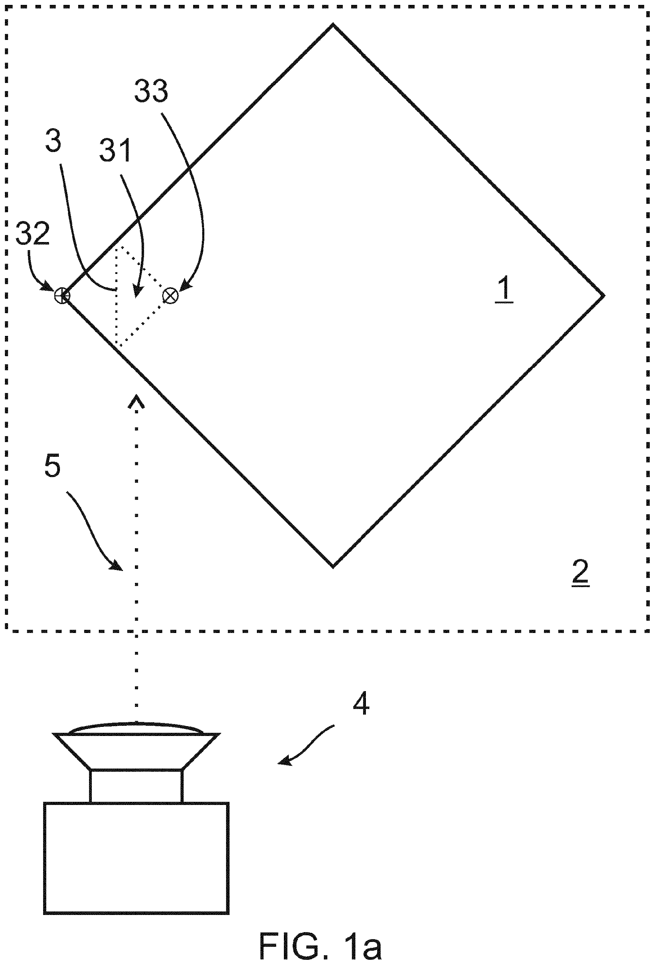

Fig. 1a) shows a top view sketch of a paper substrate (1) referring to an inventively or comparatively coated semi-finished paper product on a plane surface (2), a folding line (3), a corner point (32) and a corresponding tip point (33) for creating the isosceles triangle dog ear (31) on the paper substrate (1) and a camera (4) with focus direction (5) in the same plane as the folding line.

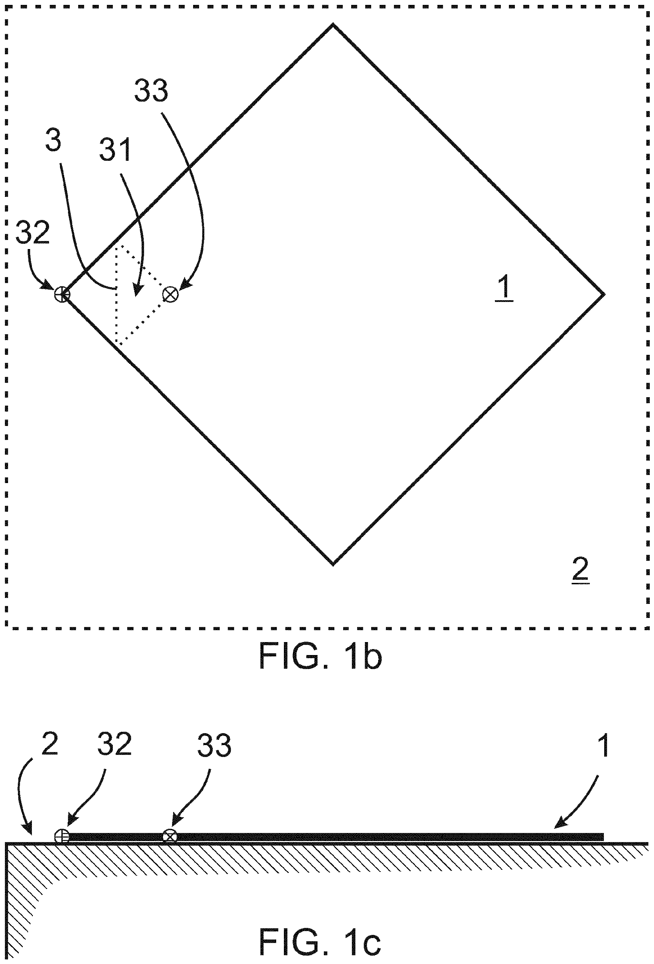

**Fig. 1b****)** shows a top view sketch of a paper substrate (1) referring to an inventively or comparatively coated semi-finished paper product on a plane surface (2), a folding line (3), a corner point (32) and a corresponding tip point (33) for creating the isosceles triangle dog ear (31) on the paper substrate (1).
**Fig. 1c****)** shows a side view sketch of shows a top view sketch of a paper substrate (1) referring to an inventively or comparatively coated semi-finished paper product on a plane surface (2), a corner point (32) and a corresponding tip point (33) for creating the isosceles triangle dog ear (31) on the paper substrate (1).

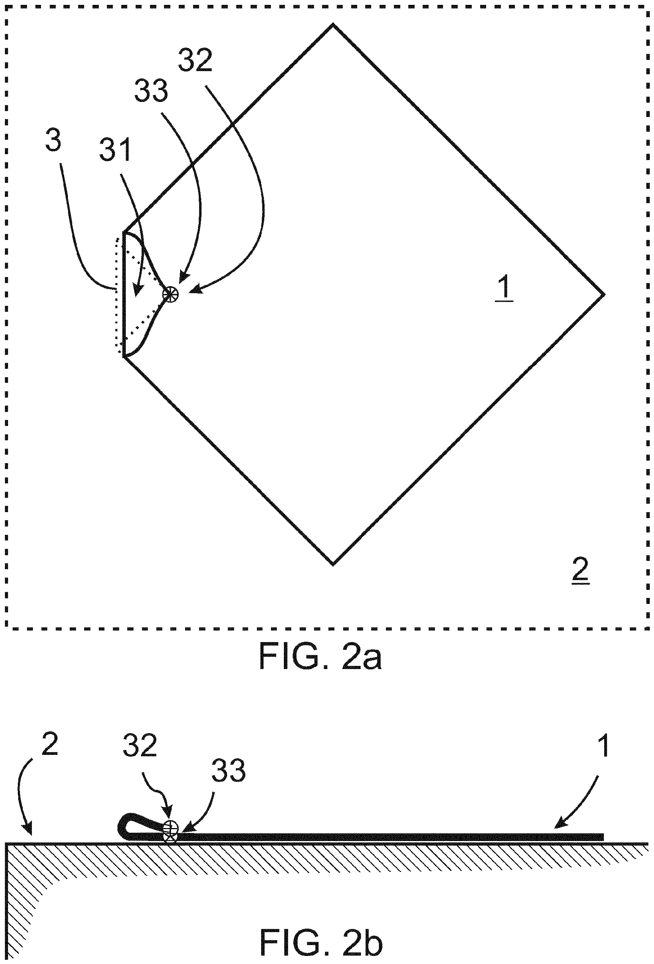

**Fig. 2a****)** shows a top view sketch of a bended paper substrate (1), where corner point (32) and tip point (33) are arranged above each other for creating the isosceles triangle dog ear (31) in the paper substrate (1).
**Fig. 2b****)** shows a side view sketch of a bended paper substrate (1), where corner point (32) and tip point (33) are arranged above each other for creating the isosceles triangle dog ear (31) in the paper substrate (1).

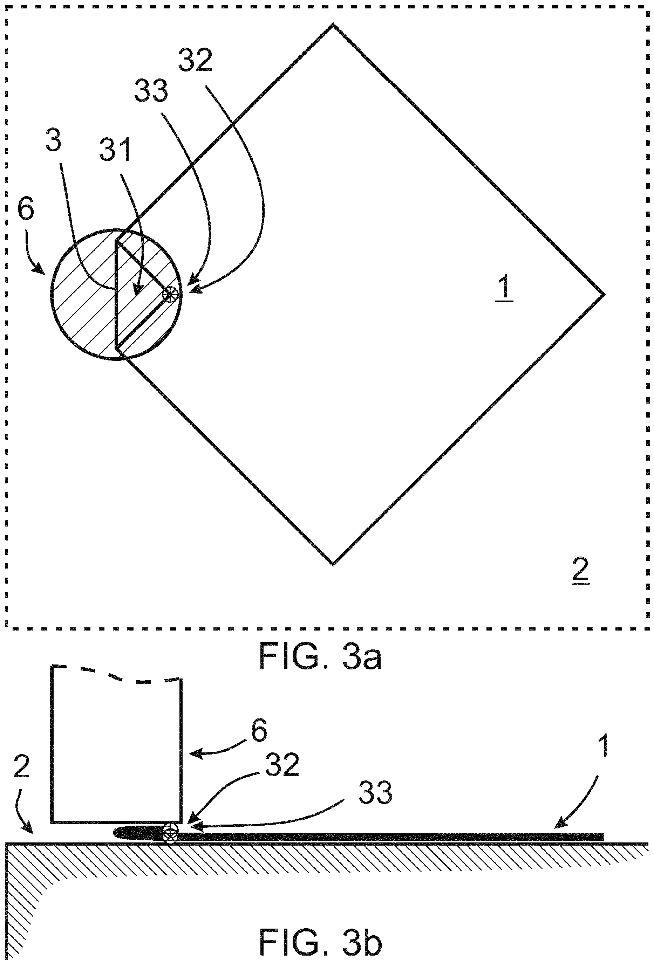

**Fig. 3a****)** shows a top view sketch of a folded paper substrate (1) including the isosceles triangle dog ear (31) formed by arranging a weight (6) on top of the bended isosceles triangle dog ear (31).
**Fig. 3b****)** shows a side view sketch of a folded paper substrate (1) including the isosceles triangle dog ear (31) formed by arranging a weight (6) on top of the bended isosceles triangle dog ear (31).

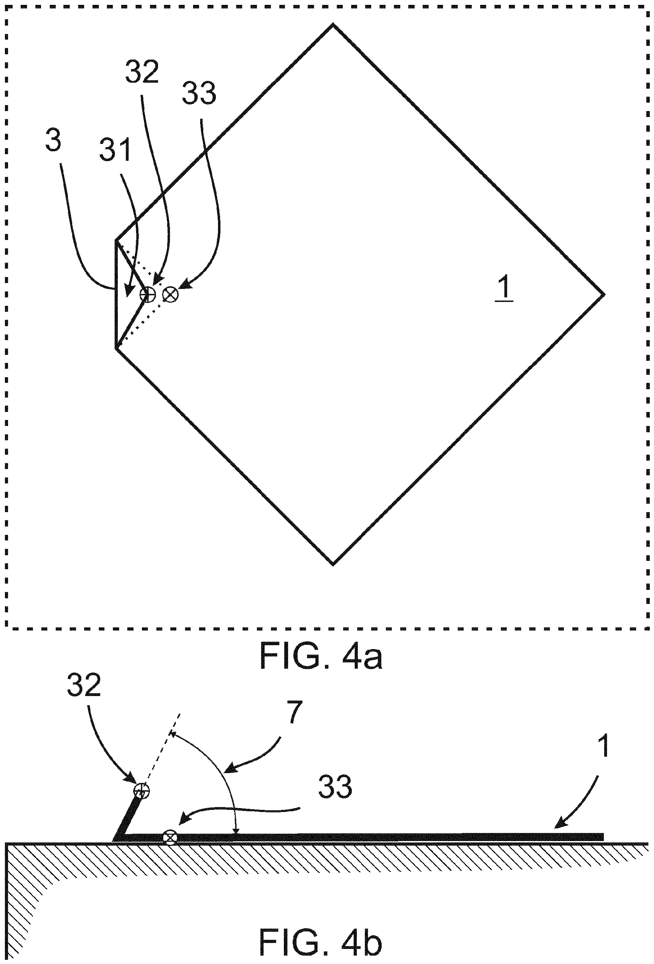

**Fig. 4a****)** shows a top view sketch of a paper substrate (1) where the paper substrate of the isosceles triangle dog ear (31) has partly turned back in direction of the original position thereby creating an angle (7) characterizing the dog ear formation resistance and/or dog ear recovery properties of the paper substrate (1).
**Fig. 4b****)** shows a side view sketch of a paper substrate (1) where the paper substrate of the isosceles triangle dog ear (31) has partly turned back in direction of the original position thereby creating an angle (7) characterizing the dog ear formation resistance and/or dog ear recovery properties of the paper substrate (1).

### DETAILED DESCRIPTION OF THE INVENTION

The surprising finding of the present invention is that a coating with nanocrystalline cellulose of at least part, preferably the whole paper product / valuable document selected from the group consisting of a security document, a banknote, a certificate or a certified copy of a document increases the resistance of dog ear formation and / or increases dog ear recovery.

Thus, the present invention in particular provides an alternative solution to using round corners (EP 1 506 095 B1) to solve the paper jam problematic in particular when automatically processing dog eared substrates. In contrast to using round cornered banknotes, the paper products of the present invention are in particular advantageous, as they can retain their dimensions and look.

The nanocrystalline cellulose coated paper products of the present invention are also advantageous in view of watermark enforced banknote substrates suggested in EP 1 468 142 B1 / EP 1 466 755 B1 and EP 2 899 315 A1, as the present invention does not require a complex adaptation of the paper manufacturing process.

According to the present invention, the term *"nano cellulose"* is used synonymously to to "nanocrystalline cellulose" (NCC) having a length in the range of 100 to 500 nm and a width in the range of 5 to 10 nm (L/D = 10 to 100).

Nanocrystalline cellulose generally refers to rodlike crystalline cellulose particles in the nanometer scale range, which may form chiral nematic suspensions. The starting material of nanocrystalline cellulose is generally subjected to a strong hydrolysis, i.e. acidic treatment, to form the rodlike crystalline cellulose particles in the nanoscale range. This is in contrast to the formation of nanofibril cellulose, where the starting material undergoes high shear forces to form spaghetti-like cellulose particles in the nanoscale range, which tend to form gel-like suspensions.

As starting material for the inventively used nanocrystalline, any suitable cellulose containing starting material can be used, in particular cotton and Eucalyptus. Commercially available nanocrystalline cellulose can also be used for all aspects of the present invention. The commercially available nanocrystalline cellulose is in general supplied in form of a suspension. Such a (commercially available) suspension can be used to form the inventively used nanocrystalline cellulose coating suspension to be used for the production of the semi-finished nanocrystalline cellulose coated paper product according to the second aspect of the present invention.

According to a preferred embodiment the nano cellulose coating suspension to be used in the context of the present invention, in particular concerning the inventive production method comprises 0.1 to 20 wt.-%, preferably 0.1 to 15 wt.-%, alternatively 0.2 to 10 wt.-%, alternatively 0.25 to 5 wt.-%, alternatively 0.5 to 2 wt.-% nanocrystalline cellulose based on the total weight of the nano cellulose coating suspension.

According to the present invention, the nano cellulose coating suspension can comprise in addition to nanocrystalline cellulose any suitable additive. Preferred additives include coatings, co-solvents, and surfactants.

According to a preferred embodiment, one, two, three or more coating agents are selected from the group consisting of polyvinyl alcohol (PVA) or mixtures thereof; starch, latex, casein, silicons or mixtures thereof. The coating agents in general may represent 0 to 10 wt.-%, preferably 1 to 8 wt.-%, alternatively 2 to 7 wt.-%, alternatively 3 to 6 wt.-%, alternatively 4 to 5 wt.-% based on the weight of the nano cellulose coating suspension. Preferably PVA is selected as coating agent.

According to a further preferred embodiment, one, two, three or more co-solvents are selected from the group consisting of low molecular weight alcohols, such as ethanol, isopropyl alcohol, glycol, etc., or high molecular weight alcohols, such as polyethylene glycols or mixtures thereof. The co-solvent agents in general may represent 0 to 20 wt.-%, preferably 0.1 to 15 wt.-%, alternatively 2 to 10 wt.-%, alternatively 5 to 7,5 wt.-% based on the weight of the coating agent in the nano cellulose coating suspension.

According to a further preferred embodiment, one, two, three or more surfactants are selected from the group consisting of cationic surfactants, non-ionic surfactants and mixtures thereof. Cationic surfactants are preferably selected from octyltrimethylammonium bromide (OTAB), didecyldimethylammonium bromide (DMAB) and cetyltrimethylammonium bromide (CTAB); nonionic like polysorbate are preferably selected from the group consisting of sorbitan monostearate, sorbitan mono laureate, sorbitan monooleate, and sorbitan monopalmitate. The surfactants in general may represent 0 to 5 wt.-%, preferably 0.1 to 4 wt.-%, alternatively 0.5 to 3 wt.-%, alternatively 1 to 2 wt.-% based on the weight of the nano cellulose coating suspension.

According to a preferred embodiment of the present inventive aspects, the nanocrystalline cellulose coating applied on the paper product does not exhibit an iridescent effect.

According to the present invention, the term *"dog ear"* relates to a folded corner of the paper product, which forms a paper flap. The formation of dog ears depend in particular on the fibre length, the grammage, the density, the internal cohesion (young's modulus) and/or the bending stiffness of the paper substrate.

According to the present invention, the term *"increasing* /*increase of dog ear resistance and*/*or increasing* / *increase of dog ear recovery*" means that inventive paper products selected from the group consisting of a security document, a banknote, a certificate or a certified copy of a document coated with nanocrystalline cellulose reduce problems arising from dog ear formation of untreated paper products, such as paper jams when automated processing the paper products, preferably banknotes. In particular the inventive paper products selected from the group consisting of a security document, a banknote, a certificate or a certified copy of a document comprising the nanocrystalline cellulose are more resistant to dog ear formation *("increasing* / *increase of dog ear resistance')* and/or in case a dog ear is formed the paper recovery is increased, which means that the dog ear does not stay folded down, but the paper exhibits a flexibility due to the inventive nanocrystalline so that the chance that it flexes back into the original flat position is increased.

A suitable method for conducting the dog ear resistance and / or dog ear recovery measurement is disclosed in the example section (see below, Examples, Part A). According to the measuring method an inventively coated paper is compared with a paper of prior art (see below, Examples, Part B and Part C). A comparative larger angle relates to an increase in resistance to mechanical stress and/or an increase in elasticity (reversible deformation) and, thus, increased resistance to dog ear formation or increased paper recovery. In contrast, a comparative small angle means that the paper is not as resistant to mechanical stress and / or not as elastic and, thus, not as resistant to dog ear formation and/or dog ear recovery.

The results provided in the example section [see below, Examples, Part B.5. (laboratory scale) and Part C.6 (pilot plant)] show that the inventively coated semi-finished paper products B.4., C.3., C.4., and C.5.] exhibit always a larger angle by the flexible dog eared paper substrate when removing the weight from the folded isosceles triangle dog ear paper than the comparatively coated paper substrate. According to the present invention, the inventively coated semi-finished paper product exhibits in accordance with the dog ear measuring method of the present invention an absolute difference in angle (Delta angle) in comparison with the comparatively PVA coated semi-finished paper product in the range from about at least + 5° to + 90° or more, alternatively from about at least + 10° to + 60° or more, alternatively from about at least + 15° to + 40° or more. The results, thus, proof that the inventively coated semi-finished paper product exhibits an increased resistance to dog ear formation and an increased dog ear recovery.

According to the present invention the term *"paper product'* or "valuable document" is selected from the group consisting of a security document, a banknote, a certificate or a certified copy of a document, e.g. certificates / certified copies of birth, residence, marital status, name etc. or a respective semi-finished paper product thereof. In particular preferred is a banknote or a semi-finished paper product thereof as inventive paper product, as a banknote is generally exposed to mechanical stress either, e.g. due to a high circulation volume, such as in particular for low denominations, and/or due to the increased banknote size, such as in particular for high denominations. A banknote or a semi-finished paper product thereof is furthermore preferred as inventive paper product, as paper jams caused in particular during automated processing and/or storing of the banknotes may be reduced. Finally, a banknote or a semi-finished paper product thereof is furthermore preferred as inventive paper product, as due to the inventive nanocrystalline cellulose the paper substrate is more flexible so that the dog ear recovery is increased, which means that the paper substrate flexes back to the flat position. Thus, the risk of separation of dog ears from the banknote, which would lead to a removal of the banknote from circulation and a shortened life time of the banknote, can also be reduced.

Accordingly, the present invention is in particular useful for a banknote or a semi-finished paper product thereof as inventive paper product, as due to increase of dog ear resistance and /or increase of dog ear recovery the automatic handling and/or storing of banknotes can be simplified and / or the risk of separation of the dog eared substrate can be reduced and / or prevented and, thus, the general duration of the banknote life time can be increased.

According to the present invention at least part, preferably the whole surface of the inventively used paper product is coated with the nano cellulose coating suspension comprising nanocrystalline cellulose. When coating the whole surface of the paper product, e.g., the surface of both sides of a security document, a banknote, a certificate or a certified copy of a document, e.g. certificates / certified copies of birth, residence, marital status, name etc. or a respective semi-finished paper product thereof is coated. In case, however, only part of the inventive paper product is coated with nano cellulose coating suspension comprising nanocrystalline cellulose either at least the surface of one side of the paper product is coated as a whole or at least one, two, three, four or more corner or edge regions of one or more sides of the paper product are inventively coated. In case the whole surface of one or more sides of the paper product is inventively coated, then the manufacturing process can be simplified by using common suitable coating techniques. In case part of the inventive paper product is coated with nano cellulose coating suspension comprising nanocrystalline cellulose then any suitable printing technique or other suitable local deposition process can be used.

According to the present invention the inventively used paper product does not comprise a security feature applied on the surface of the paper product and below the nanocrystalline cellulose coating. According to the present invention, the term *"paper product does not comprise a security feature applied on the surface of the paper product and below the nanocrystalline cellulose coating"* means that the inventive nanocrystalline cellulose coating is applied to a semi-finished paper product, preferably a semi-finished banknote substrate (also called *"security paper")* prior to applying one or more security features and / or applying other prints on the surface of the banknote substrate. The security paper may, however, comprise watermarks, security threads, security fibres, pigments etc. at least partly incorporated into the security paper. Accordingly, the nanocrystalline cellulose coating is inventively coated on a semi-finished paper-product, preferably semi-finished banknote substrate formed on the paper making machine and prior to subsequent handling processes, in particular printing and/or lamination processes.

The above mentioned preferred embodiments of the present invention, in particular of the first inventive aspect are separately or in all possible combinations applicable to all remaining inventive aspects.

Further disclosed is a method of manufacturing a semi-finished paper product characterized in that
a) a semi-finished paper product is provided, which does not comprise a security feature or print applied on the surface of the paper product,
b) a nanocrystalline cellulose coating suspension is provided and
c) at least part, preferably the whole surface of the semi-finished paper product of step a) is coated with the nanocrystalline cellulose coating suspension of step b).

Preferably the nanocrystalline coated semi-finished paper product in step c) is subsequently dried according to conventional drying times and techniques. In general the nanocrystalline coated paper is dried fast, e.g. less than an hour, preferably less than 10 minutes, alternatively less than 5 minutes, alternatively less than one 1 minute. In this case no iridescent effect can be observed, as the nanocrystalline cellulose particles are not enabled to organize themselves. Thus, as already discussed the inventively nanocrystalline coated papers do not exhibit an iridescent effect.

According to the present invention the term *"semi-finished paper product'* refers to paper product, which must undergo a further treatment after coating with the inventively used nano cellulose coating suspension comprising nanocrystalline cellulose. In particular with respect to banknote products as inventive paper products, this means that the semi-finished banknote substrate refers to a so called security paper, which does not comprise a security feature and / or other print applied on the surface of the security paper substrate, preferably where the security feature and / or other print is respectively applied after the finishing the paper making process on the paper making machine. Thus, the security paper may comprise security features, such as watermarks, fibres, planchettes, threads etc., embedded at least partially in the security paper substrate, but it does not comprise a security feature and / or other print, which is respectively applied after the paper formation process on the surface of the security paper substrate.

According to the present disclosure, any suitable coating method can be used to coat the nano cellulose coating suspension comprising nanocrystalline cellulose on the semi-finished paper product in step c). Preferably the coating method can be selected from the group consisting of impregnation, size pressing, spray coating, solid deposition, flexographic coating, blade coating, air blade coating and / or roll coating.

The amount of nanocrystalline cellulose applied to the paper substrate depends on the characteristics of the paper substrate, such as fibre length, the grammage, the density, the internal cohesion (young's modulus) and/or the bending stiffness of the paper substrate used. If necessary, the cycles of application of nanocrystalline cellulose can be increased and/or the application units, such as spraying units, roller units etc. can be increased to apply sufficient amount of nano cellulose coating suspension comprising nanocrystalline cellulose to achieve the increase in dog ear resistance and/or dog ear recovery.

In case of impregnation of the semi-finished paper product, preferably the semi-finished banknote substrate, the substrate is at least in part, preferably as a whole immersed in the nano cellulose coating suspension in step c). Additionally or alternatively, the semi-finished product may be coated at least in part, preferably as a whole by size pressing or any other suitable coating method, such as spray coating, solid deposition, flexographic coating, blade coating, air blade coating and / or roll coating etc. in step c).

Also disclosed herein is a semi-finished paper product wherein at least part, preferably the whole surface of the paper product is coated with nano cellulose coating suspension comprising nanocrystalline cellulose, and the paper product does not comprise a security feature applied on the surface of the paper product and below the nanocrystalline cellulose coating. All preferred embodiments disclosed herein before, are also applicable to the semi-finished paper product.

According to the second inventive aspect a valuable document selected from the group consisting of a security document, a banknote, a certificate or a certified copy of a document comprises a semi-finished paper product, wherein at least part, preferably the whole surface of the semi-finished paper product is coated with nanocrystalline cellulose having a length in the range of 100 to 500 nm and a width in the range of 5 to 10 nm, characterized in that the valuable document comprises one or more security features and/or prints applied on top of the surface of the nanocrystalline cellulose coating, but does not comprise a security feature applied on the surface of the paper product and below the nanocrystalline cellulose coating.

### DESCRIPTION OF REFERENCE NUMERALS

1: paper substrate (refers to inventively or comparatively coated semi-finished paper product)
2: plane surface
3: folding line to be created by dog ear
31: isosceles triangle dog ear paper substrate
32: corner point of paper substrate to be folded for dog ear formation
33: point in paper substrate corresponding to corner point for creating isosceles triangle dog ear
4: camera
5: focus direction of camera
6: weight covering folding line and preferably the isosceles triangle dog ear paper substrate
7: angle created in paper substrate by removing weight of isosceles triangle dog ear paper substrate

### EXAMPLES:

### A: Dog ear resistance and / or dog ear recovery measurement

For conducting the dog ear resistance and / or dog ear recovery measurement the following method can be used. For paper substrates differing in particular in fibre length, the grammage, the density, the internal cohesion (young's modulus) and/or the bending stiffness of the paper substrate different dimensions of dog ears may be used.

A square sample of a paper substrate (1) (refers to an inventively or comparatively coated semi-finished paper product in accordance with the present application) with an edge length of generally 5 to 7 cm is used for the test. The paper substrate (1) is placed in a standardized position on a flat surface (2) in such a way that the folding line (3) created by the dog ear is orthogonal and lies in the same plane as the focus direction (5) of the camera (4) measuring the angle created by the dog ear (see Figures 1a), 1b) and 1c)). The pictures taken by the camera (4) should have 72 dpi resolution. Any suitable camera can be used. The mobile device Nokia lumia 635 is an example of a camera to be used for taking the picture.

The corner point (32) of the paper substrate and the corresponding tip point (33) of the paper substrate (1) for creating an isosceles triangle dog ear (31) are preferably marked with a pen in such a way that the resulting dog ear provides an isosceles triangle with an angle of 45° and a side length of 1.0 - 2.5 cm (see Figures 2a) and 2b)).

The isosceles triangle dog ear is formed by flapping the corner point (32) to the tip point (33) without creating further pressure on the folding line (3). Then a suitable weight (6) is placed on the folding line (3), wherein the weight (6) should cover the whole folding line (3) and preferably the whole isosceles triangle dog ear (31) formed (see Figures 3a) and 3b)). The confining pressure of the weight should preferably be chosen to be in the range of 0.1 - 0.7 kPa.

Upon removing the weight (6) from the paper substrate (1) the paper substrate of the isosceles triangle dog ear (31) will - dependent on the dog ear formation / recovery properties - turn back in direction of the original position (see Figures 4a) and 4b)). The resulting angle (7) formed between the paper substrate of the isosceles triangle dog ear (31) and the remaining plane paper substrate (1) is captured with the camera (4) in time intervals starting directly after removing the weight (6) from the paper substrate (see Figures 1a) and 4a) and b)). Time intervals ranging from 5 to 600 sec after removing the weight can be chosen depending on the nature of paper and the confining pressure of the applied weight. The resulting angle (7) should be determined at such a time point when no change in angle (7) can be detected anymore in time interval up to 600 seconds.

The pictures taken are preferably analyzed with the software image J for the resulting angle (7). The experiment is repeated for 4-6 times and the resulting angle (7) is reported as average of the 4-6 replicates.

According to the measuring method an inventively coated paper is compared with a paper of prior art. A comparative larger resulting angle (7) relates to a comparative increased resistance to mechanical stress and/or an increase in elasticity (reversible deformation) and, thus, increased resistance to dog ear formation or increased paper recovery of the paper substrate (1). In contrast, a comparative smaller resulting angle (7) means that the paper substrate (1) is not as resistant to mechanical stress and / or not as elastic and, thus, not as resistant to dog ear formation and/or dog ear recovery.

### B: Production of inventively coated banknote and comparative prior art banknote on laboratory scale

### B.1. Production of the comparative 5 wt-% PVA coating solution

The comparative 5 wt-% PVA coating solution is prepared by adding 100 g PVA (Mowiol 4-98, Mw = 27000 g/mol, Sigma Aldrich) to 1900 g deionised water in a reaction vessel. The vessel is equipped with a mechanical stirring and placed on a magnetic heating table. The aqueous solution is heated to 90°C and stirred at 300 rpm until all PVA is dissolved. The solution is kept stirring at 60°C until usage and/or until preparation of the inventive nanocellulose coating suspension of part B.2.

The comparative 5 wt-% PVA solution has been chosen, as it is common state of the art in paper manufacturing, in particular in manufacturing of security paper, in particular banknotes, to enhance surface and post treatments, such as print applications by coating the paper with a respective PVA solution.

### B.2. Production of inventive nanocellulose coating suspension

The inventive nanocellulose coating suspension is produced by using commercially available nano crystalline cellulose suspension product (Maine university, Lenght: 150nm (+/- 50),Width: 10nm (+/-5)). The commercially available nano crystalline cellulose suspension product has a solid content of 11 wt-% and is sonicated with a sonicator, lower power (200W, 20Hz → 40% at 6 output) for 5 minutes prior to the preparation of the inventive nanocellulose coating suspension. Into a reaction vessel 22.7 g of the commercially available sonicated 11 wt-% nanocrystalline cellulose suspension, 450g of the 5w% PVA coating solution prepared in part B.1 and 27.3 g of deionised water were added and stirred at 60°C for 15 minutes using an ultraturrax.

### B.3. Production of uncoated semi-finished paper product of a banknote in laboratory scale:

The semi-finished paper product of a banknote is produced on cylinder mould vat paper machine (Voith) at appr. 70 m/min. The fibers used for the paper are 100% cotton. TiO₂ Anatase is used as additive and acidic dies added are added into the pulp slurry. The resulting paper has an approximately basis weight of appr. 82 g/m², an average fibres length of appr. 0.8 mm, an ash content < 6% and squareness ratio of appr. 1.8.

### B.4. Production of inventively coated semi-finished paper product of a banknote in laboratory scale:

A heating table maintains the temperature of the inventive nanocellulose coating suspension of part B.2 at 60°C during the impregnation step. The semi-finished paper product of a banknote of part B.3. was immersed into the inventive nanocellulose coating suspension of part B.2. for 20 seconds. Subsequently, the semi-finished paper product of a banknote is removed from the coating suspension and is drained from access of coating liquid for 5 seconds. Following the inventively coated semi-finished paper product of a banknote is placed on a Teflon plate and a Teflon roll is passed in order to remove additional overflow. Then, the inventively coated semi-finished paper product of a banknote is placed between a metal frame (to ensure a drying on both sides and to maintain the flat paper surface during the drying) and is dried in an oven for approximately 3 minutes at 115°C.

The basis weight of the inventively coated semi-finished paper product of a banknote increased from 80.8 (+/- 2.4) g/m² to 86.3 (+/- 3.4) g/m² upon impregnation with the inventive nanocellulose coating suspension of part B.2.

### B.5. Production of comparatively coated semi-finished paper product of a banknote in laboratory scale:

The comparative example is produced according to the description of the inventively coated semi-finished paper product of a banknote of part B.3 with the exception that for impregnation the 5w% PVA coating solution according to part B.1. is used. The basis weight of the comparatively coated semi-finished paper product of a banknote increased from 80.8 (+/- 2.4) g/m² to 89.1 (+/- 2.9) g/m² upon impregnation with the comparative 5 wt-% PVA coating solution.

### B.6. Comparison of results of dog ear measurement test for inventively coated and comparatively coated semi-finished paper product of a banknote in laboratory scale:

The inventively and comparatively coated semi-finished paper substrates (1) of a banknote of examples B.4 and B.5 used for the dog ear measurement have an edge length of 5 cm and the isosceles triangle dog ear has a side length of 1.9 cm. The resulting angles (7) presented in the tables below are averaged over 3-6 replicates. The pictures are analyzed with image J and are taken 120 sec after removing the weight. The weight is fully covering the folded isosceles triangle dog ear (31) and has a confining pressure of 0.3, 0.6, 1.0 or 1.2 kPa (see Figures 3a) and 3b)).

**Table 1: Results of dog ear measurement of inventively and comparatively coated semi-finished paper substrate of a banknote**

| **Pressure for dog ear test (kPa)** | **Example B.4, 1 0% NCC** | | ***Comparative Example B.5, 100% PVA*** | | **Delta of angle [°]** | **Relation of angle B.4 vs. B.5 [%]** |
|---|---|---|---|---|---|---|
| | AVG | STDEV | AVG | STDEV | | |
| **0.3** | 81.21 | 7.16 | 69.26 | 8.11 | + 12.0 | + 17.3 |
| **0.6** | 76.46 | 8.66 | 57.55 | 10.32 | + 18.9 | + 32.9 |
| **1** | 54.36 | 4.40 | 37.78 | 5.10 | + 16.6 | + 43.9 |
| **1.2** | 48.40 | 3.04 | 37.00 | 1.85 | + 11.4 | + 30.8 |

According to the dog ear measuring method of part A, the inventively coated semi-finished paper product of a banknote B.4 exhibits for all confining pressures 0.3, 0.6, 1.0 and 1.2 kPa larger resulting angles (7) than the comparative example B.5 comprising a PVA coating, which is usually comprised on security paper, such as banknotes. A larger angle relates to an increase in resistance to mechanical stress and/or an increase in elasticity (reversible deformation) and, thus, increased resistance to dog ear formation or increased paper recovery. In contrast, the comparative smaller angle means that the comparatively coated semi-finished paper product of a banknote is not as resistant to mechanical stress and / or not as elastic as the inventively coated semi-finished paper product of a banknote and, thus, is not as resistant to dog ear formation and/or dog ear recovery.

Dependent on the confining pressure used for the inventive nanocellulose coating paper substrate of a banknote B.4, the absolute difference of the average angle (Delta angle °) of the respective B.4 paper substrates versus comparative examples of B.5 ranges from + 11.4° to + 18.9°. The best results are obtained for a confining pressure of 0.6 and 1 kPa. As a confining pressure of 0.6 kPa provides the best differentiating results, the confining pressure of 0.6 kPa has been used for the comparative measurements conducted in Part C (paper made on pilot plant).

### C: Production of inventively coated paper of a banknote and comparative prior art paper of a banknote on pilot plant

### C.1. Production of inventive nanocellulose coating suspensions with different amounts of nano crystalline cellulose.

The inventive nanocellulose coating suspension is produced by using commercially available nano crystalline cellulose suspension product (Maine university, Lenght: 150nm (+/- 50),Width: 10nm (+/-5)). The commercially available nano crystalline cellulose suspension product has a solid content of 11 wt-% and is sonicated with a sonicator, lower power (200W, 20Hz → 40% at 6 output) for 5 minutes prior to the preparation of the inventive nanocellulose coating suspension.

### C.1.1 Target amount of 0.25 wt-% nano crystalline cellulose in inventive nanocellulose coating suspension:

Into a reaction vessel 34.1 g of the commercially available sonicated 11 wt-% nanocrystalline cellulose suspension, 1.425.0 g of the 5 wt-% PVA coating solution prepared in part B.1 and 40.9 g of deionised water were added and stirred at 60°C for 5 minutes.

### C.1.2 Target amount of 0.5 wt-% nano crystalline cellulose in inventive nanocellulose coating suspension:

Into a reaction vessel 68.2 g of the commercially available sonicated 11 wt-% nanocrystalline cellulose suspension, 1.350.0 g of the 5 wt-% PVA coating solution prepared in part B.1 and 81.8 g of deionised water were added and stirred at 60°C for 5 minutes.

### C.1.3 Target amount of 1.0 wt-% nano crystalline cellulose in inventive nanocellulose coating suspension:

Into a reaction vessel 136.4 g of the commercially available sonicated 11 wt-% nanocrystalline cellulose suspension, 1.200.0 g of the 5 wt-% PVA coating solution prepared in part B.1 and 163.6 g of deionised water were added and stirred at 60°C for 5 minutes.

### C.1.4 Comparison PVA coating solution with 0 wt-% nano crystalline cellulose:

Into a reaction vessel 1.500.0 g of the 5 wt-% PVA coating solution prepared in part B.1 is added and stirred at 60°C for 5 minutes.

### C.2. Production of uncoated semi-finished paper product of a banknote on pilot plant:

The semi-finished paper product of a banknote was produced on a pilot paper machine running at appr. 2 m/min. The fibers used for the paper are 100 wt-% cotton (60° SR). 5% TiO₂ Anatase was used as additive and acidic dies were added into the pulp slurry. In addition to TiO₂ the paper pulp also comprises 2.7 wt.-% wet strength agent Polyamideamine epichlorohydrin (PAE) and 3-6 wt-% anionic polymer carboxymethylcellulose (CMC). Two layers with basis weights of about 25 g/m² (first layer) and appr. 60 g/m² (second layer) are combined to form the resulting semi-finished paper product of a banknote, which has a basis weight of appr. 85-90 g/m² and a sheet width of about 250 mm.

### C.3. Production of inventively coated semi-finished paper product of a banknote on pilot plant with target amount of 0.25 wt.-% NCC (C.1.1):

The inventive nanocellulose coating suspension of part C.1.1 (made from 34.1 g NCC suspension, 1.425 g 5 wt-% PVA solution and 40.9 g deionised water) is added at 60°C to the reservoir of a roller coater and continuously circulated and heated to 60°C during the impregnation process. The semi-finished paper product of a banknote of part C.2 is fed at appr. 2 m/min and after passing the impregnation tank, roller bars and calendaring, the inventively coated semi-finished paper product of a banknote is instantly dried in a connected dryer at 130°C.

The basis weight of the inventively coated semi-finished paper product of a banknote increased from 90.6 g/m² to 95.0 g/m² upon impregnation with the 0.25 wt-% NCC containing inventive nanocellulose coating suspension.

### C.4. Production of inventively coated semi-finished paper product on pilot plant with target amount of 0.5 wt.-% NCC (C.1.2):

The inventive nanocellulose coating suspension of part C.1.2 (made from 68.2 g NCC suspension, 1.350 g 5 wt-% PVA solution and 81.8 g deionised water) is added at 60°C to the reservoir of a roller coater and continuously circulated and heated to 60°C during the impregnation process. The semi-finished paper product of part C.2 is fed at appr. 2 m/min and after passing the impregnation tank, roller bars and calendaring, the inventively coated semi-finished paper product is instantly dried in a connected dryer at 130°C.

The basis weight of the inventively coated semi-finished paper product of a banknote increased from 90.6 g/m² to 96.3 g/m² upon impregnation with the 0.5 wt-% NCC containing inventive nanocellulose coating suspension.

### C.5. Production of inventively coated semi-finished paper product of a banknote on pilot plant with target amount of 1.0 wt.-% NCC (C.1.3):

The inventive nanocellulose coating suspension of part C.1.3 (made from 136.4 g NCC suspension, 1.200 g 5 wt-% PVA solution and 163.6 g deionised water) is added at 60°C to the reservoir of a roller coater and continuously circulated and heated to 60°C during the impregnation process. The semi-finished paper product of a banknote of part C.2 is fed at appr. 2 m/min and after passing the impregnation tank, roller bars and calendaring, the inventively coated semi-finished paper product is instantly dried in a connected dryer at 130°C.

The basis weight of the inventively coated semi-finished paper product of a banknote increased from 90.6 g/m² to 96.5 g/m² upon impregnation with the 1.0 wt-% NCC containing inventive nanocellulose coating suspension.

### C.6. Production of comparatively coated semi-finished paper product on pilot plant with target amount of 0 wt.-% NCC (C.1.4):

The comparative PVA coating solution of part C.1.4 (made from 1.500 g 5 wt-% PVA solution) is added at 60°C to the reservoir of a roller coater and continuously circulated and heated to 60°C during the impregnation process. The semi-finished paper product of a banknote of part C.2 is fed at appr. 2 m/min and after passing the impregnation tank, roller bars and calendaring, the inventively coated semi-finished paper product is instantly dried in a connected dryer at 130°C.

The basis weight of the inventively coated semi-finished paper product of a banknote increased from 90.6 g/m² to 95.0 g/m² upon impregnation with the comparative PVA coating solution with 0 wt-% NCC.

### C.7. Comparison of results of dog ear measurement test for inventively coated and comparatively coated semi-finished paper product of a banknote on pilot plant:

The inventively and comparatively coated semi-finished paper substrates (1) of a banknote of examples C.3, C.4, C.5 and C.6 used for the dog ear measurement have an edge length of 5 cm and the isosceles triangle dog ear has a side length of 1.9 cm. The resulting angles (7) presented in the tables below are averaged over 3-6 replicates. The pictures are analyzed with image J and are taken 120 sec after removing the weight. The weight is fully covering the folded isosceles triangle dog ear (31) and has a confining pressure of 0.6 kPa (see Figures 3a) and 3b)).

**Table 2: Results of dog ear measurement of inventively and comparatively coated semi-finished paper substrate**

| **#** | **Amount of NCC in (nanocellulose) coating suspension (wt-%)** | **Amount of 5 wt.-% PVA solution in (nanocellulose) coating suspension (wt-%)** | **Angle (°) AVG** | **Angle STDEV** |
|---|---|---|---|---|
| **C.3** | 0.25 | 4.75 | 53.2 | 15.5 |
| **C.4** | 0.5 | 4.5 | 74.4 | 5.5 |
| **C.5** | 1.0 | 4.0 | 61.5 | 4.5 |
| **C.6 Comp. example** | 0 | 5.0 | 39.5 | 1.3 |

According to the dog ear measuring method of part A, the inventively coated semi-finished paper products of banknote C.3, C.4 and C.5 exhibit larger resulting angles (7) than the comparative example C.6 comprising a PVA coating, which is usually comprised on security paper, such as banknotes. A larger angle relates to an increase in resistance to mechanical stress and/or an increase in elasticity (reversible deformation) and, thus, increased resistance to dog ear formation or increased paper recovery. In contrast, the comparative smaller angle means that the comparatively coated semi-finished paper product of a banknote is not as resistant to mechanical stress and / or not as elastic as the inventively coated semi-finished paper product of a banknote and, thus, is not as resistant to dog ear formation and/or dog ear recovery.

Dependent on the inventive nanocellulose coating used for C.3, C.4 or C.5, the absolute difference of the average angle (Delta angle °) of C.3, C.4 or C.5 versus comparative example C.6 ranges from + 13.7° to + 34.9°.

## Claims

1. A use of nanocrystalline cellulose having a length in the range of 100 to 500 nm and a width in the range of 5 to 10 nm for increasing the resistance of dog ear formation and / or dog ear recovery of paper product selected from the group consisting of a security document, a banknote, a certificate or a certified copy of a document, wherein at least part, preferably the whole surface of the paper product is coated with the nanocrystalline cellulose.

2. The use according to claim 1, wherein the security document, banknote, certificate or certified copy of a document does not comprise a security feature applied on the surface of the paper product and below the nanocrystalline cellulose coating.

3. A valuable document selected from the group consisting of a security document, a banknote, a certificate or a certified copy of a document comprising a semi-finished paper product, wherein at least part, preferably the whole surface of the semi-finished paper product is coated with nanocrystalline cellulose having a length in the range of 100 to 500 nm and a width in the range of 5 to 10 nm, **characterized in that** the valuable document comprises one or more security features and/or prints applied on top of the surface of the nanocrystalline cellulose coating, but does not comprise a security feature applied on the surface of the paper product and below the nanocrystalline cellulose coating.

## Patentansprüche

1. Verwendung von nanokristalliner Cellulose, die eine Länge im Bereich von 100 bis 500 nm und eine Breite im Bereich von 5 bis 10 nm hat, zur Erhöhung der Beständigkeit gegen Eselsohrbildung und/oder des Eselsohrrückstellvermögens eines Papierprodukts, ausgewählt aus der Gruppe bestehend aus einem Sicherheitsdokument, einer Banknote, einem Zertifikat oder einer beglaubigten Abschrift eines Dokuments, wobei zumindest ein Teil, vorzugsweise die gesamte Oberfläche des Papierprodukts mit der nanokristallinen Cellulose beschichtet ist.

2. Verwendung nach Anspruch 1, wobei das Sicherheitsdokument, die Banknote, das Zertifikat oder die beglaubigte Abschrift eines Dokuments kein Sicherheitsmerkmal umfasst, das auf der Oberfläche des Papierprodukts und unterhalb der Beschichtung aus nanokristalliner Cellulose aufgebracht ist.

3. Wertdokument, ausgewählt aus der Gruppe bestehend aus einem Sicherheitsdokument, einer Banknote, einem Zertifikat oder einer beglaubigten Abschrift eines Dokuments, umfassend ein halbfertiges Papierprodukt, wobei zumindest ein Teil, vorzugsweise die gesamte Oberfläche des halbfertigen Papierprodukts mit nanokristalliner Cellulose beschichtet ist, die eine Länge im Bereich von 100 bis 500 nm und eine Breite im Bereich von 5 bis 10 nm hat, **dadurch gekennzeichnet, dass** das Wertdokument ein oder mehrere Sicherheitsmerkmale und/oder Drucke umfasst, die oben auf der Oberfläche der Beschichtung aus nanokristalliner Cellulose aufgebracht sind, aber kein Sicherheitsmerkmal umfasst, das auf der Oberfläche des Papierprodukts und unterhalb der Beschichtung aus nanokristalliner Cellulose aufgebracht ist.

## Revendications

1. Utilisation de cellulose nanocristalline présentant une longueur dans la plage de 100 à 500 nm et une largeur dans la plage de 5 à 10 nm pour l'augmentation de la résistance à la formation de corne et/ou la récupération de corne d'un produit en papier choisi dans le groupe composé d'un document de sécurité, d'un billet de banque, d'un certificat ou d'une copie certifiée d'un document, au moins une partie, de préférence l'entière surface du produit en papier étant revêtue de la cellulose nanocristalline.

2. Utilisation selon la revendication 1, le document de sécurité, le billet de banque, le certificat ou la copie certifiée d'un document ne comprenant pas de caractéristique de sécurité appliquée sur la surface du produit en papier et au-dessous du revêtement en cellulose nanocristalline.

3. Document de valeur choisi dans le groupe composé d'un document de sécurité, d'un billet de banque, d'un certificat ou d'une copie certifiée d'un document comprenant un produit en papier semi-fini, au moins une partie, de préférence l'entière surface du produit en papier semi-fini étant revêtue de cellulose nanocristalline présentant une longueur dans la plage de 100 à 500 nm et une largeur dans la plage de 5 à 10 nm, **caractérisé en ce que** le document de valeur comprend une ou plusieurs caractéristiques de sécurité et/ou des impressions appliquées sur le dessus de la surface du revêtement en cellulose nanocristalline, mais ne présente pas de caractéristique de sécurité appliquée sur la surface du produit en papier et au-dessous du revêtement en cellulose nanocristalline.
